# EUROPEAN PATENT APPLICATION

(11) **EP 0 963 864 A2**
(43) Date of publication of application: **15.12.1999**
(21) Application number: 99660107.6
(22) Date of filing: 10.06.1999
(51) Int. Cl.: B60C 11/12, B60C 11/13, B29C 33/42, B29D 30/06

(54) **Structure for profiled elements in a vehicle tire tread, one profiled element containing one or several fine slits, and a mold element for producing said profiled elements**

(30) Priority: 10.06.1998 FI 981322; 03.11.1998 FI 982379
(71) Applicant: Nokian Renkaat OyJ., 37101 Nokia (FI)
(72) Inventor: Kiviaho, Antti, 37100 Nokia (FI)
(74) Representative: Lassenius, Birgitta Maria

(57) **Abstract**

The invention relates to the structure of a profiled element (1) in a vehicle tire tread (2). A conventional profiled element is provided with narrow fine slits (3), oriented mainly in the axial direction of the tire, in order to improve the grip between the tread and the road surface. However, said fine slits make the profiled element wobbly and the driving instable. The object of the invention is to reduce the wobbly effect caused by the fine slits (3) and to maintain the necessary rigidity in the tire. This is achieved by making the fine slit (3) twisted, i.e. by twisting it in a screwlike fashion with respect to the axis parallel to the tread, so that the imaginary plane filling the fine slit is continuously and evenly twisted from one end (7a), which is inclined in one direction with respect to the radial plane, to the other end (7b), which is inclined in the opposite direction, or as an alternative, continuously in a stepped fashion, so that said imaginary plane is folded during the stretch between the ends (7a, 7b) around one or several, mainly radially directed axes.

## Description

The invention relates to a structure for profiled elements in a vehicle tire tread, one profiled element containing one or several fine slits, more precisely a structure defined in the preamble of the appended claim 1. The invention also relates to a mold element for producing such profiled elements, more precisely a mold element defined in the preamble of the appended claim 15.

Profiled elements in a tire tread are groove-surrounded blocks that are cast in shape in the tread. The task of the profiled elements is to increase the vehicle's grip of the road. A surface provided with profiled elements gets a good contact with a soft or snowy road surface. Any slush, snow or other similar material present on the road surface is pressed into the grooves surrounding the profiled element, where it increases the grip of the tire.

In the prior art it is known to provide profiled elements with various patterns of fine slits, the purpose of which is to increase friction between the tread and the road surface. The fine slits are narrow, recess-like grooves formed in the profiled element mainly in the radial direction of the tire. The fine slits are formed by means of sheet metal elements, i.e. lamellas. The height of said recesses can be equal to the height of the profiled element or less. The height of the fine slit can vary in the different parts thereof.

The grooves surrounding the profiled elements in the tire tread are relatively wide, and as a result the profiled elements do not, at least in normal driving conditions, get into mutual contact, not to mention rest against each other. On the other hand, the fine slits are so narrow that when driving, the opposite side surfaces of the fine slit get into contact at least owing to a change in speed and/or in direction, i.e. the side surfaces are supported against each other.

The more fine slits the tread contains, the better is the grip that the tread gets of the road surface. On the other hand, the fine slits make the tread wobbly and the driving instable.

In the publication DE 4,427,895 A1, there is introduced a tire tread including fine slits as well as a lamella (figure 3) for forming fine slits in a tread. The lamella is a rectangular piece of sheet, with parallel and radial ends, while the region in between the ends is positioned at an angle with respect to the radial direction and provided with a wavelike shape. Owing to the inclined position of the wavelike region, the fine slits are locked to each other during brake action.

The publication EP 515,349 A1 specifies a tire tread complete with profiled elements and fine slits provided therein. The fine slits are three-dimensional structures, and their purpose to reduce the relative moving of the groove walls with respect to each other, in other words to reduce the wobbling of the profiled element. The lamellas meant for forming the fine slits are mainly planar, and in the casting mold they are fitted mainly in the vertical position. The lamella surfaces are provided with a large number of three-dimensional patterns by means of radial, inclined and curved twistings and bendings.

The publication EP 829,381 introduces a profiled element structure provided with radially directed fine slits and fine slits arranged mainly in the direction of the tire axis, one half of said fine slits being inclined, when seen in the axial direction, to one direction and the second half to the opposite direction, so that in between them, there is created a border plane parallel to the circumference of the tire. A trapezoidal border plane separates the two halves of the fine slit from each other, and the distance between them grows towards the bottom edge. The border plane that forms a steep angle in the direction of operations of the lamella is a spot susceptible to tearing. Moreover, air flows poorly in a steep-edged lamella and leads to changes in the pressure, which again causes more noise.

The object of the present invention is to achieve a profiled element where the above described drawbacks are eliminated and which contains such fine slits for increasing the grip of the road surface that reduce the wobbling of the profiled element to a level much lower than in the prior art, so that the rigidity needed in the profiled element is maintained.

Said objects are achieved by means of the profiled element according to the invention, essentially differing from the profiled elements described in the above mentioned publications, said profiled element being provided with a fine slit structure and with a lamella, by means of which the fine slit structure according to the invention is made in the profiled element.

The profiled element according to the invention is mainly characterized by the novel features enlisted in the characterizing part of the appended claim 1.

One end of the fine slits of the profiled element is inclined in the radial direction of the tire, and the other is inclined in the other direction. The fine slit or, as is defined in the appended claims, the imaginary plane filling the fine slit, is twisted in a screwlike fashion with respect to the axis parallel to the tread, so that said imaginary plane is continuously and evenly twisted from one end to the other. As an alternative, said imaginary plane is folded, during the stretch between the two ends, around one or several mainly radial axes, in which case the twisting continues in a stepped fashion from one end to the other.

The imaginary plane filling the fine slit may in general twist continuously in different manners, advantageously so that the bottom and surface edge of the plane are both mainly straight, gently curved or zigzagged and intersect each other when seen from the top. As an alternative, one of the longitudinal edges of the imaginary plane is straight and the other curved or zigzagged.

The imaginary plane filling the fine slit is folded, according to the alternative embodiment, mainly around radial axes, in which case the folding angle δ at the bottom or surface edge is between 10° and 70°, advantageously 45°, and decreases as a result of the screwlike twist towards the twisting axis.

The end portions of the straight bottom edge or straight top edge of the imaginary plane filling the fine slit are located either on the same line, or alternatively they are parallel with each other and spaced apart. The bottom edge of the fine slit is advantageously formed of elements that are positioned at different heights from the bottom level of the profiled element.

The twisting axis parallel to the tread of the fine slit is located on the level of the bottom edge, on the level of the slit top edge or in the middle region of the slit, in which case the cross-section of the slit, when seen from the side, is V-shaped, X-shaped or A-shaped. In the longitudinal direction, the fine slit is advantageously symmetrical.

The inclination of the end of the fine slit with respect to the radial plane, angle α:2, is advantageously between 5° and 20°, preferably 12°.

The main orientation of the fine slit with the rotation direction of the tire, angle β, is between 0° and 90°, advantageously 70°. Because the twisted lamination according to the invention does not create sharp edges that are susceptible to tearing in the profiled element, the lamellas can also be installed in the profiled element in the longitudinal direction in relation to the driving direction, β = 0°, or at a desired angle. Thus more rubber edges are obtained in the sideways direction of the tire, which improves the sideways grip with snow and ice.

The angular position β of the fine slits is advantageously matched according to where in tread the profiled element in question is situated. The horizontal cross-sectional form of the fine slit is advantageously matched with the horizontal cross-sectional form of the profiled element. Also the number of the fine slits is matched with the shape and size of the profiled element. In a profiled element, one ore several pairs of fine slits are advantageously identical or mirror images of each other.

A gentle curving or folding of the fine slit according to the invention, in relation to the radially directed axis, to an angle which is fairly small with the adjacent slit level, renders rigidity for the profiled element in the sideways direction, but it does not disturb water or air from flowing, wherefore the wet grip is extremely good, and the noise level does not grow.

The fine slits of the profiled element according to the invention are more alert to grip function than the conventional straight fine slits. The slit opens up and one of the slit walls forms a grip edge with respect to the road surface.

Owing to the described structure of the fine slit, the number of the fine slits in the profiled element can be increased without reducing the rigidity of the profiled element and without increasing its wobbling. Consequently, the grip between the tire and the road surface is improved. The fine slit according to the invention has two functions; one part serves as a friction member in forward driving and acceleration, and the other part respectively when backing up or braking. By suitably distributing the elements effective in the opposite directions of the fine slits on the profiled element surface and/or on the tread, there is achieved a balanced friction between the tread and the road surface. In winter tires, the profiled elements according to the invention are advantageously arranged in the middle of the tread, and in summer tires advantageously at the edges. Thus, in winter tires, there is achieved a remarkable improvement in the grip, and in summer tires there is achieved a better support.

In the simplest case, the shape of the fine slit resembles a canoeing paddle, so that the slit ends are twisted to opposite directions, while the portion in between the two ends is gradually twisted from one angle to an opposite angle. The twisting axis parallel to the tread is located either at the slit bottom edge, top edge or symmetrically in the middle of the slit. Advantageously the fine slit is symmetrical with respect to the vertical axis. As regards the selection of the shape for the fine slit, it will be appreciated that the lamella creating the slit must not include large inclination angles nor steep twisting angles, which would make the casting of the profiled element impossible.

The bottom line of the fine slit can be smooth and parallel to the surface level of the tread, or it can be cogged, which means that in between the walls restricting the fine slit, there are created support bridges which enforce the profiled element, which in turn leads to more even wear, freedom of vibration and noise, as well as improves the roadholding features. Moreover, said bridges, while making the profiled element more rigid, enable a denser slit pattern, which increases the grip of the road.

A fine slit is created by arranging a sheet metal piece of a respective shape, i.e. a lamella, in the mold of the tire or of the tread. The thickness of the lamella varies from roughly 0.3 mm to 2 mm; with passenger cars it is advantageously ≤ 1 mm and with trucks advantageously ≤ 2 mm.

The lamella is advantageously shaped by a known press tool, and it is attached to the mold in a known fashion.

The height and thickness measures of the fine slit vary remarkably between a truck tire and a passenger car tire. In a truck tire, the height of the lamella is 10 - 20 mm, advantageously about 15 mm, and in a passenger car tire 5 - 10 mm, advantageously about 8 mm. The inclination angle, α:2, when measured at the end of the lamella and with respect to the vertical plane, is the same for both tire types, i.e. 5° - 20°, advantageously about 12°.

The profiled element according to the invention is described in more detail in the specification below with reference to the appended drawings, where
- figure 1: is a perspective view of a profiled element according to the invention, placed in a tread and containing one fine slit;
- figure 2: illustrates a mold element according to the invention, containing two lamellas in order to create a surface pattern with two fine slits;
- figure 3a: is a front-view illustration of the lamella used in the mold according to figure 2;
- figure 3b: is a top-view illustration of the lamella according to figure 3a;
- figure 3c: is a side-view illustration of figure 3a;
- figure 4a: illustrates a similar lamella as in figure 3a, but provided with cogs made in the bottom edge;
- figure 4b: illustrates a similar lamella as in figure 4a, but provided with cogs with a different shape;
- figures 5a-5c: illustrate figures similar to figures 3a - 3c of the lamella according to another embodiment of the invention;
- figure 6a: is a bottom-view illustration of a lamella according to another embodiment of the invention;
- figure 6b: is a front-view illustration of the lamella according to figure 6a;
- figure 6c: is a side-view illustration of the lamella according to figure 6a;
- figure 6d: is a top-view illustration of the lamella according to figure 6a; and
- figure 7: illustrates part of the tire tread.

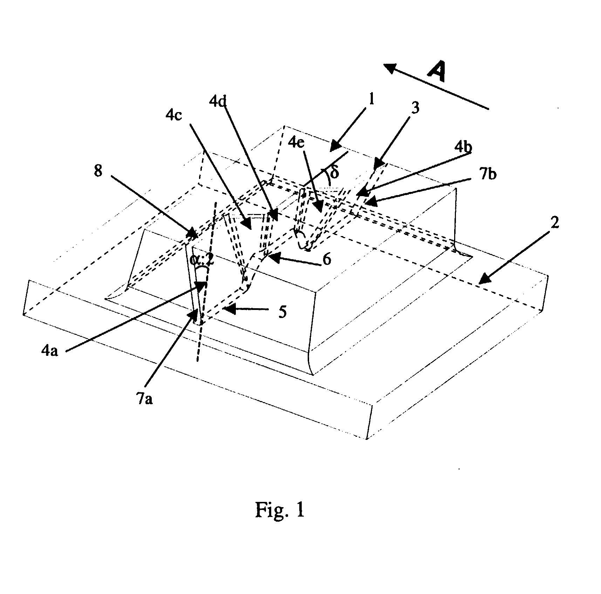

In figure 1, the profiled element 1 is installed in the tread 2, and a rectangular portion of said tread is illustrated in the drawing. The tire driving direction is marked with the arrow A. The fine slit 3 of the profiled element is made roughly in the middle of the profiled element, with respect to the driving direction, and in relation to the driving direction it extends transversally from one end of the profiled element to the other end. The fine slit 3 or, as is defined in the claims, the imaginary plane filling the fine slit, is twisted continuously in a stepped fashion over the profiled element and is in the longitudinal direction folded around three mainly radially directed axes to five parts, i.e. end portions 4a and 4b, intermediate portions 4c and 4e, as well as a middle portion 4d. In relation to the radial plane, the end portion 4a is folded at an angle α:2 of roughly 15° towards the driving direction, and the end portion 4b is folded at a respective angle in relation to the radial plane against the driving direction. The middle portion 4d is parallel to the radial plane, and the portions 4c and 4e connect the middle portion and the end portions and are consequently twisted. The thread of the fine slit is gentle and continues in a stepped fashion. The angle δ, which is illustrated between the middle level 4d and the preceding level 4e when seen in the twisting direction, at the height of the surface edge 8, is about 45°. Because the end portions 4a and 4b, and the middle portion 4d are all mutually parallel, and in similar fashion the end portions 4c and 4e are mutually parallel, and consequently all angles δ are equally large. The angles δ decrease, as a consequence of the screwlike twist, towards the twisting axis.

At the end portions 4a and 4e, the fine slit has the same height as the profiled element 1, but at the middle portions 4b-4d, the slit bottom 5 is raised by means of a cog 6. The cog 6 forms a support bridge between the profiled element parts separated by the fine slit 3, which makes the profiled element more rigid. The bottom parts of the end portions 4a and 4b of the fine slit are parallel but slightly spaced apart.

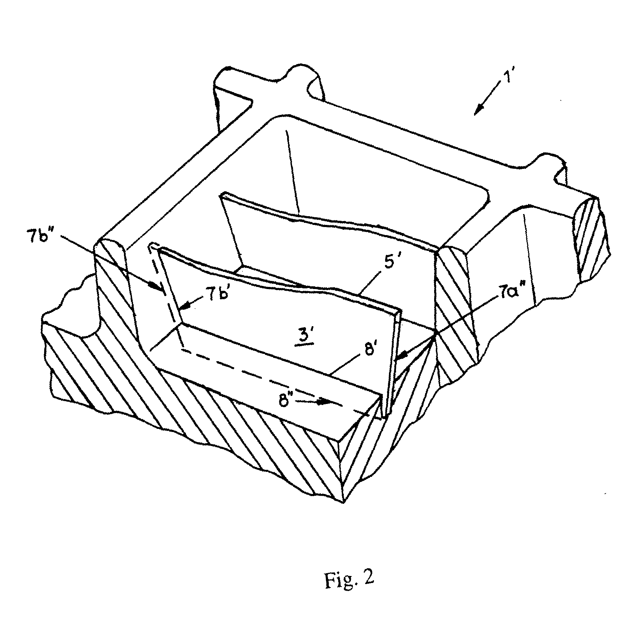

Figure 2 illustrates a mold element 1' including two lamellas 3'. The bottom edge 8" of the lamellas is fitted inside the mold, and the borderline 8' between the lamella plane 3' and the mold bottom shall constitute the surface edge 8 of the fine slit 3 in the future profiled element. The borderline 8' is straight, wherefore the surface edge of the fine slit shall also be straight. The top edge 5' of the lamella is twisted continuously and evenly from one edge to the other with a gentle curve. The ends 7a'' and 7b'' are inclined at a slight angle with respect to the radial plane, to opposite directions. The top edge 5' of the lamella remains somewhat underneath the top edge of the mold walls, wherefore the fine slit 3 will not extend as far as the bottom of the profiled element. The ends 7a'' and 7b" are installed in the mold walls.

Figure 2 illustrates the lamella 3' used in the mold 1'.

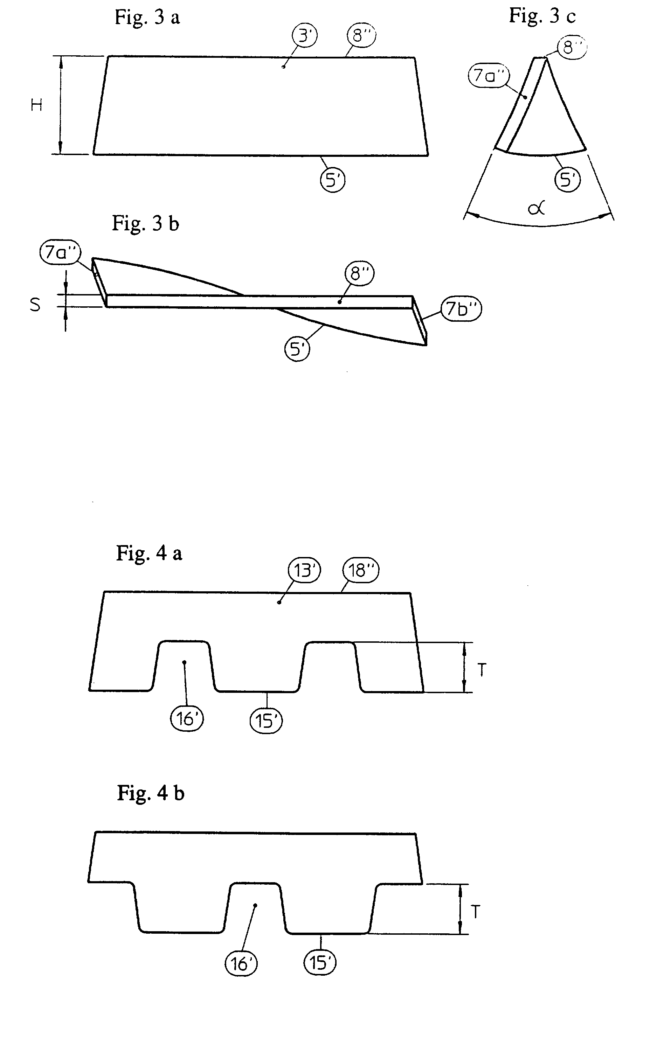

Figures 3a - 6d illustrate other advantageous lamellas of the mold part in order to make a fine slit in a tread.

In figures 3a - 3c, the illustrated lamella is somewhat narrowed upwardly, according to the mold walls. The lamella height is marked with H, and its thickness with S. The side-view illustration of figure 3c shows the inclination angle α between the ends 7a' and 7b'. The twisting axis passes at the height of the bottom edge 8'' of the lamella, wherefore the cross-section of the inclination in the mold is V-shaped. The lamella can also be positioned upside down in the mold, which makes the surface of the fine slit straight and smooth.

Figures 4a and 4b illustrate a lamella 13' resembling the one illustrated in figure 3a. At the top edge 15' of said lamella 13', there are made slots 16'. The height T of said slots can be 30 - 70 % of the lamella height H. One lamella 13' has two slots 16' and the other three slots 16'.

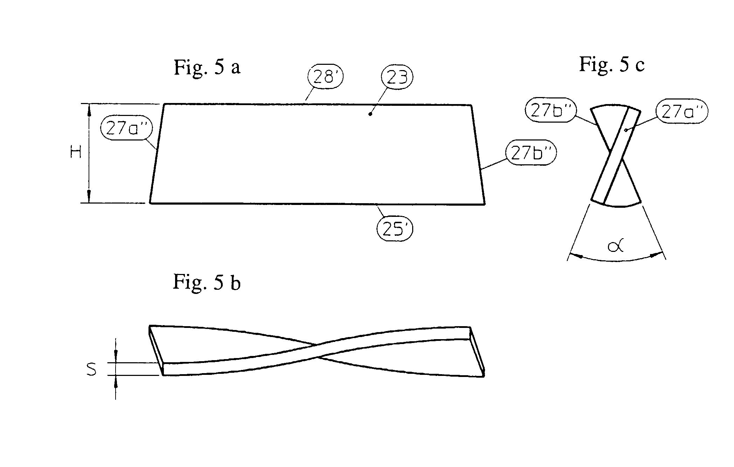

Figures 5a - 5c illustrate a lamella 23' resembling the one described in figure 3a. In the region between the ends 27a'' and 27b'', folded in the opposite directions, this lamella is twisted around the longitudinal axis passing on the middle height of the lamella, see figure 5c. The bottom edge 28" and top edge 25' of the lamella are identical in shape and gently curved. This embodiment makes the profiled element more rigid in both sideways directions.

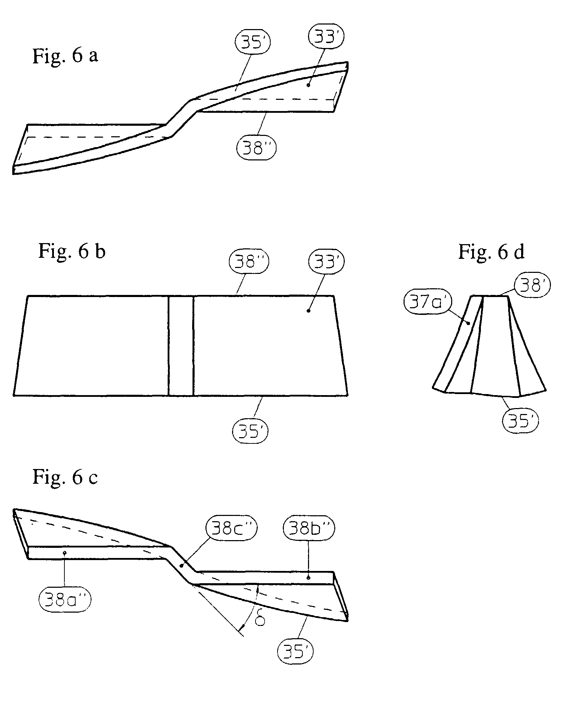

Figures 6a - 6d illustrate a lamella 33', the bottom edge 38" of which is twisted in a stepped fashion around two radially directed axes. Said lamella is formed of two parallel and slightly spaced-apart portions 38a'' and 38b'' and of a middle portion 38c" connecting said two. The twisting angleδ of the middle portion is roughly 50°.

The top edge 35' of the lamella 33' is twisted with respect to the bottom edge 38" more gently and so that it rectifies the main orientation of the lamella, i.e. so that the bottom edge 38'' of the lamella is mainly parallel to the orientation of the middle portion 38'' of the lamella.

By means of the lamellas illustrated in figures 3 - 6, a desired fine slit or slits are achieved in the profiled element. In a tire mold or respectively in a mold for making the tread, there is fitted a desired amount of said lamellas in a desired position. Depending on the size and shape of the profiled element, there are advantageously two or three fine slits, either similar or different in shape, and turned either in parallel or opposite directions.

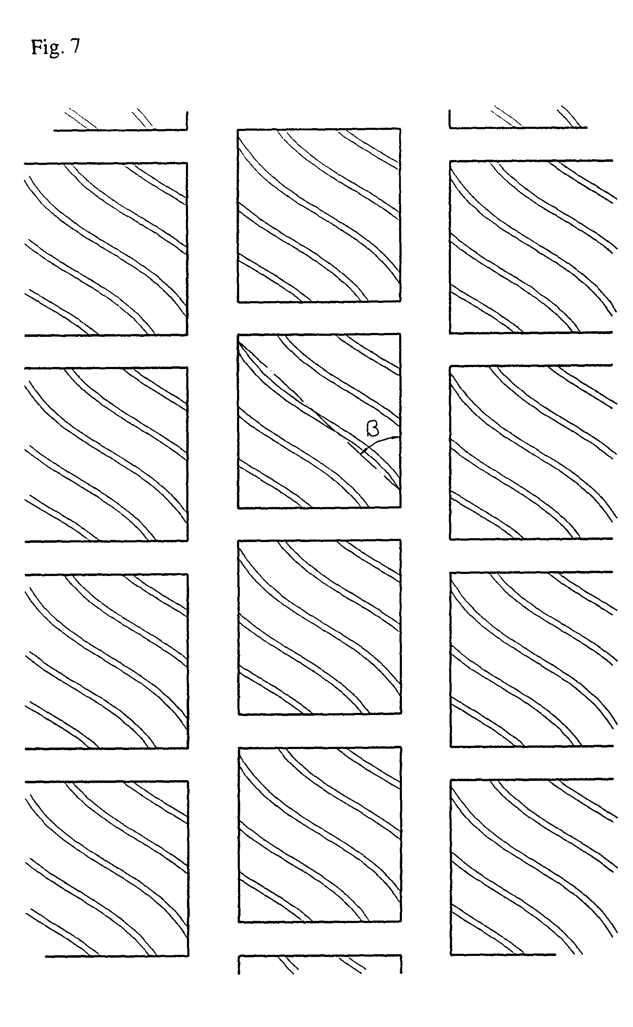

Figure 7 shows part of a tire tread provided with the profiled elements according to the invention. The angle β, formed by the main orientation of the fine slits, is marked in the drawing, as well as the tire rotating direction. The rotating direction is marked with an arrow.

## Claims

1. A structure for profiled elements (1) in a vehicle tire tread (2), wherein the profiled elements are bordered by surrounding grooves, said profiled elements comprising one or several narrow, recess-like fine slits (3), mainly of the same height as the profiled element, said fine slit being connected to said surrounding groove at both ends, one end (7a) of the fine slit being inclined in one direction with respect to the radial direction of the tire, and the other end (7b) of the fine slit being inclined in the opposite direction with respect to the radial direction of the tire, **characterized in that** the fine slit (3) is twisted in a screwlike fashion in relation to the axis parallel to the tread, so that an imaginary plane filling the fine slit is twisted continuously and evenly from one end (7a) to the other end (7b), or alternatively continuously in a stepped fashion, so that during the stretch between the ends (7a, 7b), it is folded around one or several, mainly radially directed axes.

2. A profiled element structure according to claim 1, **characterized in that** of the longitudinal edges (5, 8) of the imaginary plane filling the fine slit (3), one is straight and the other is curved or zigzagged.

3. A profiled element according to claim 1, **characterized in that** the longitudinal edges of the imaginary plane filling the fine slit (3), i.e. the bottom edge (5) and the surface edge (8) are both mainly straight, curved or zigzagged and intersect each other when seen from the top.

4. A profiled element structure according to any of the preceding claims, **characterized in that** the ends of the straight bottom edge (5) or the straight surface edge (8) of the imaginary plane filling the fine slit (3) are located on the same line, or that they are parallel but spaced apart.

5. A profiled element structure according to any of the preceding claims, **characterized in that** the folding angle (δ) of the imaginary plane filling the fine slit (3) around the mainly radially directed axis is at the bottom edge (5) or at the surface edge (8) of said plane within the range 10° - 70°, advantageously 45°.

6. A profiled element structure according to one or several of the preceding claims, **characterized in that** the bottom edge (5) of the fine slit (3) is formed of elements that are located on different levels in relation to the bottom level of the profiled element (1).

7. A profiled element structure according to any of the preceding claims, **characterized in that** the twisting axis of the imaginary plane filling the fine slit (3) is located either on the level of the slit bottom edge (5), the slit surface edge (8) or in the middle region of the slit.

8. A profiled element structure according to one or several of the preceding claims, **characterized in that** the fine slit (3) is symmetrical in the longitudinal direction.

9. A profiled element structure according to one or several of the preceding claims, **characterized in that** the end (7a) of the fine slit (3) forms a given inclination angle (α:2) with the radial plane, and the other end (7b) forms another, equally large inclination angle (α:2) in the opposite direction, the angle α being within the region 10° - 40°, advantageously 24°.

10. A profiled element structure according to any of the preceding claims, **characterized in that** the main orientation of the fine slit (3) forms, together with the rotation direction of the tire, an angle (β), which is within the range 0° - 90°, advantageously 70°.

11. A profiled element structure according to one or several of the preceding claims, **characterized in that** the horizontal cross-sectional form of the fine slit (3) is matched with the horizontal cross-sectional form of the profiled element (1).

12. A profiled element structure according to one or several of the preceding claims, **characterized in that** the position of the angle (β) of the fine slits (3) with respect to the rotation direction of the tire is matched with the location of the profiled element (1) in the tread (2).

13. A profiled element structure according to one or several of the preceding claims, **characterized in that** the number of the fine slits (3) in each profiled element (1) is matched with the shape and size of the profiled element in question.

14. A profiled element structure according to any of the preceding claims, **characterized in that** the profiled element (1) comprises one or several fine slits (3), which are either identical or mirror images of each other.

15. A mold element (1') for forming a profiled element (1) in a vehicle tire tread, said mold element comprising lamellas (3') positioned mainly in the radial direction of the tire to be shaped, in order to create fine slits (3) resembling narrow recesses in the profiled element (1), said lamellas having a height no higher than the mold element and extending as far as the mold element sides, one end (7a") of the lamellas being inclined in one direction with respect to the radial direction of the tire, and the other end (7b") being inclined in the opposite direction with respect to the radial direction of the tire, **characterized in that** the lamella (3') is twisted, in a screwlike fashion, with respect to the axis parallel to the tread to be formed, mainly continuously and evenly, from one end (7a'') to the other (7b''), or as an alternative continuously in a stepped fashion, so that it is folded during the stretch between the ends (7a'', 7b'') around one or several axes that are mainly parallel to the radially directed axis.

16. A mold element according to claim 15, **characterized in that** both longitudinal edges of the lamella (3'), i.e. the bottom edge (8") inside the mold and the opposite top edge (5') which constitutes the bottom edge (5) of the fine slit (3), are mainly straight, curved or zigzagged and intersect each other when seen from the top.

17. A mold element according to claim 15 or 16, **characterized in that** of the longitudinal edges (8", 5') of the lamella, one is straight and the other is curved or zigzagged.

18. A mold element according to one or several of the claims 15 - 17, **characterized in that** the straight end portions of the bottom edge (8'') or the top edge (5') of the lamella (3') are located on the same line or are parallel but spaced apart.

19. A mold element according to one or several of the claims 15 - 18, **characterized in that** the folding angle (β) of the lamella around the mainly radially directed axis is, at the radially directed lamella bottom edge (8'') or the top edge (5') within the range 10° - 70°, advantageously 45°.

20. A mold element according to one or several of the claims 15 - 19, **characterized in that** the top edge (5') of the lamella is cogged so that the edge comprises slots (16) and full-size lamella parts in an alternating fashion.

21. A mold element according to any of the claims 15 - 20, **characterized in that** the twisting axis of the lamella is positioned either at the bottom edge (8"), at the top edge (5') or in the middle region of the lamella height.

22. A mold element according to any of the claims 16 - 18, **characterized in that** the lamella (3') is symmetrical in the longitudinal direction.

23. A mold element according to any of the claims 16 - 22, **characterized in that** the end (7a") of the lamella (3) forms a given inclination angle (α:2) with the radial plane, and the other end (7b") forms an equally large inclination angle (α:2) in the opposite direction, said angle being within the range 10° - 40°, advantageously 24°.
